# EUROPÄISCHE PATENTANMELDUNG

(11) **EP 2 110 899 A2**
(43) Veröffentlichungstag der Anmeldung: **21.10.2009**
(21) Anmeldenummer: 09157469.9
(22) Anmeldetag: 07.04.2009
(51) Int. Cl.: H01R 25/14

(54) **Vorrichtung zur Versorgung mit elektrischer Spannung und/oder Signal- und Datenübertragung**

(30) Priorität: 18.04.2008 DE 102008019505
(71) Anmelder: Werner, Frau Carlotta, 99423 Weimar (DE); Böhm, Herr Philipp, 99423 Weimar (DE)
(72) Erfinder: Werner, Frau Carlotta, 99423 Weimar (DE); Böhm, Herr Philipp, 99423 Weimar (DE)
(74) Vertreter: Kruspig, Volkmar

(57) **Zusammenfassung**

Die Erfindung betrifft eine Vorrichtung zur Versorgung mit elektrischer Spannung und/oder Signal- und Datenübertragung. Diese umfasst eine in und/oder auf einem elektrisch isolierenden Wandkörper (1) verlegte, parallel zu einer Wandoberfläche orientierte Anordnung aus einer ersten elektrischen Leiterfläche (2) und mindestens einer weiteren bezüglich der ersten elektrischen Leiterfläche elektrisch isolierten parallel orientierten elektrischen Leiterfläche mit einem mittels einer Bohrung in den Wandkörper einsetzbaren Kontaktierelement (5) mit Kontaktabschnitten (6) zum Abgreifen einer zwischen den Leiterflächen anliegenden elektrischen Spannung. Bei einer Ausführungsform ist das Kontaktierelement mit den Kontaktabschnitten als ein stabförmiger Kontaktierdübel mit zueinander beabstandeten, auf einer Mantelfläche des Kontaktierdübels angeordneten und mit jeweils einer Leiterfläche elektrisch kontaktierbaren Kontaktflächen mit einem im Körper des Kontaktierdübels vorgesehenen elektrischen Leiter und/oder einem elektrischen Bauelement ausgebildet.

## Beschreibung

Die Erfindung betrifft eine Vorrichtung zur Versorgung mit elektrischer Spannung und/oder Signal- und Datenübertragung nach dem Oberbegriff des Anspruchs 1.

Wände, insbesondere Raum- oder Gebäudewände im Außen- oder Innenbereich, und in einer entsprechenden Weise auch Decken und Böden, bestehen für gewöhnlich aus einem elektrisch isolierenden Wandkörper und einem auf den Wandkörper aufgetragenen ebenfalls elektrisch isolierenden Verputz oder einer anderen Sichtverblendung. Für den Wandkörper werden dabei beispielsweise Mauerwerk oder Betonkonstruktionen eingesetzt, der Verputz besteht aus Mörtel mit einer entsprechend gewählten Oberflächenstruktur und Farbgestaltung. Im Rahmen moderner Gebäudearchitekturen ist der Wandkörper oft als Sichtbeton ausgebildet. Hierbei handelt es sich im wesentlichen um eine armierte Betonwand mit einer optisch ansprechend gestalteten Oberfläche ohne zusätzliche Verblendungen.

Derartige Wandkonstruktionen erweisen sich in Hinblick auf die Elektrifizierung der daran angrenzenden Raumbereiche als nachteilig und unpraktisch. Dies zeigt sich insbesondere bei modernen Gebäudegestaltungen, bei denen variabel einziehbare Wände für veränderbare Raumaufteilungen vorgesehen sind. Dabei muss die elektrische Spannungsversorgung den veränderlichen Raumaufteilungen angepasst werden. Hierzu ist es entweder notwendig, bereits bei der Gebäudekonzeption sehr genau den Verlauf elektrischer Leitungen zu planen oder die Leitungen entsprechend neu zu verlegen. Dies gilt in entsprechender Weise für Leitungen, die für Daten- und Signalübertragungen genutzt werden.

Eine Neuverlegung derartiger Leitungen ist im Wandbereich allerdings stets aufwändig und bei Wänden aus Sichtbeton praktisch unmöglich, ohne das Erscheinungsbild der Wand erheblich zu beeinträchtigen. Deshalb müssen geeignete Maßnahmen ergriffen werden, um die verlegten Leitungen zu verblenden. Hierzu werden zum Beispiel abgehängte Decken oder nachträglich umgebaute Sockelleisten notwendig. Dies bringt einen zusätzlichen Installationsaufwand mit sich.

Auch für konventionelle Wandausführungen mit einem Verputz ist ein nachträgliches Verlegen von Leitungen oft nur mit einem erheblichen Aufwand möglich. Der Verputz muss zumindest an den entsprechenden Wandbereichen entfernt und nach Verlegen der Leitung neu aufgetragen werden. Die Bereiche, in denen die Leitungen nachträglich verlegt wurden, sind nach Abschluss der Arbeiten in der Regel sichtbar, der neu aufgetragene Verputz unterscheidet sich meist durch seine Farbe oder seine Oberflächenstruktur.

Zudem sind die Arbeiten in der Regel mit Schmutz und nicht unbeträchtlichen Lärmbelästigungen verbunden, insbesondere dann, wenn der Verputz entfernt werden muss.

Daraus ergibt sich die Aufgabe, eine Vorrichtung zur Versorgung mit elektrischer Spannung zu schaffen, mit denen die geschilderten Nachteile vollständig beseitigt werden können. Es soll insbesondere sichergestellt werden, dass elektrische Verbraucher oder drahtgebundene Kommunikationsgeräte bei beliebigen Raumaufteilungen an einer beliebigen Stelle installiert werden können, ohne dass deren genauer Ort vorgeplant werden muss. Die gesuchte Vorrichtung soll mit geringen Kosten verbunden sein und eine sichere elektrische Versorgung für die Verbraucher gewährleisten.

Die Aufgabe wird mit einer Vorrichtung zur Versorgung mit elektrischer Spannung und/oder Signal- und Datenübertragung mit den Merkmalen des Anspruchs 1 gelöst. Im Folgenden sind unter dem Begriff "Wand" bzw. "Wandkörper" sämtliche bauliche Vorrichtungen zu verstehen, die einen gegebenen Raum umgrenzen. Dies betrifft außer einer senkrecht orientierten Seitenwand auch eine Schrägwand und vor allem auch einen Boden bzw. eine Decke eines gegebenen Raumbereichs.

Die erfindungsgemäße Vorrichtung umfasst eine in und/oder auf einem elektrisch isolierenden Wandkörper verlegte, parallel zu einer Wandoberfläche orientierte Anordnung aus einer ersten elektrischen Leiterfläche und mindestens einer weiteren bezüglich der ersten Leiterfläche elektrisch isolierten parallel orientierten elektrischen Leiterfläche. Weiterhin umfasst die Erfindung ein in Bohrungen des Wandkörpers einsetzbares Kontaktierelement mit Kontaktabschnitten zum Abgreifen einer zwischen den Leiterflächen anliegenden elektrischen Spannung.

Der Erfindung liegt der Grundgedanke zugrunde, flächige Leiterstrukturen in den Wandaufbau einzufügen oder der Wand aufzulagern. Der kontaktierende Zugriff auf die Leiterstrukturen kann dann durch ein einfaches Aufbohren der Wand an einer an sich beliebigen Stelle und durch ein Einführen eines Kontaktierelementes in das Bohrloch erfolgen. Die elektrische Spannung wird von den Leiterstrukturen in der Wand über das Kontaktierelement abgegriffen. Weil sich die Leiterstrukturen über eine beliebig große Wandfläche erstrecken, wird eine Vorausplanung für das Verlegen von elektrischen Leitungen oder Installationsorten von Verbrauchern bzw. eine Nachinstallation von Leitungen überflüssig. Die elektrische Spannung kann gleichsam an beliebiger Stelle "direkt aus der Wand" entnommen werden. Es versteht sich, dass in diesem Fall ein Anbringen eines Anschlusses für drahtgebundene Daten- und Signalübertragungen an beliebiger Stelle ebenfalls möglich ist.

Diese Vorrichtung kann in mehreren Ausführungsformen realisiert sein. Bei einer ersten Ausführungsform ist eine auf den Wandkörper aufgelagerte schichtförmige Anordnung aus mehreren elektrischen Leiterflächen und jeweils dazwischen angeordneten elektrisch isolierenden Abstandsschichten vorgesehen.

Diese schichtförmige Anordnung ist bei einer zweckmäßigen Ausführungsform mit einer isolierenden Deckschicht, insbesondere einer Putzschicht, überdeckt. Die Vorrichtung bildet bei diesen Ausführungsformen eine auf den Wandkörper aufgebrachte, verkleidende Anordnung, die insbesondere als ein Teil einer Verputzung angelegt sein kann. Eine derartige Ausführungsform erweist sich insbesondere für ein nachträgliches Aufbringen in einem bestehenden Baubestand als zweckmäßig.

Bei einer zweiten zweckmäßigen Ausführungsform ist mindestens eine erste und zweite Leiterfläche in den Wandkörper selbst eingeschlossen. Eine derartige Ausführungsform empfiehlt sich insbesondere für Sichtbetonwände, bei denen Verputzungen nicht vorgesehen sind. Diese Ausführungsform ist vor allem für Neubauten zweckmäßig.

Das Kontaktierelement mit den Kontaktabschnitten ist zweckmäßigerweise als ein stabförmiger Kontaktierdübel ausgebildet. Dieser weist zueinander beabstandete, auf einer Mantelfläche des Kontaktierdübels angeordnete und mit jeweils einer Leiterfläche elektrisch kontaktierbare Kontaktflächen und im Körper des Kontaktierdübels vorgesehene elektrische Leiter und/oder ein elektrisches Bauelement auf. Er ist somit in ein, in die Wand an beliebiger Stelle einzubringendes, Bohrloch einschiebbar und greift über die Kontaktflächen die über mindestens zwei Leiterflächen anliegende Spannung ab. Über die innerhalb des Kontaktierdübels angeordneten Leiter kann ein elektrischer Strom abgeleitet werden.

Zweckmäßigerweise kann der Kontaktierdübel ein Schaltmittel zum beliebigen Schließen und Unterbrechen des elektrischen Kontaktes zwischen mindestens einer Kontaktfläche und mindestens einer Leiterfläche aufweisen. Dadurch ist die Kontaktierung reversibel gestaltet und kann jederzeit aktiviert bzw. deaktiviert werden.

Bei einer zweckmäßigen Ausführungsform ist das Schaltmittel als ein Mittel zur Formänderung der Kontaktfläche, insbesondere zu dessen reversibler Verdickung, ausgebildet. Dadurch lässt sich die Kontaktfläche gegen die Leiterfläche im Bohrloch drücken, wobei der elektrische Kontakt geschlossen wird, oder von der Leiterfläche lösen, wodurch der Kontakt unterbrochen wird. Zudem wird dadurch der Kontaktierdübel im Bohrloch stabilisiert.

Hierzu weist bei einer Ausführungsform das Schaltmittel einen schraubenförmigen Aufbau aus einer Außenhülse und einem relativ dazu dreh- und verschiebbaren Innenkörper mit der durch die Schraubbewegung formveränderbaren Kontaktfläche, auf.

Bei einer zweiten Ausführungsform ist das Schaltmittel als ein Schiebeschalter aus der Außenhülse und dem Innenkörper ausgebildet. Der Innenkörper ist innerhalb der Außenhülse verschiebbar, wobei mindestens eine Kontaktfläche durch die Verschiebung ihre Form ändert.

Zweckmäßigerweise ist der Schiebeschalter zusätzlich mit einem verriegelbaren Schalthebel ausgestattet.

Bei einer dritten Ausführungsform ist das Schaltmittel in Form eines aufweitbaren Spreizdübels ausgebildet. Der elektrische Kontakt ist dabei dadurch herstellbar, dass in den Kontaktierdübel von außen ein entsprechendes aufweitendes Teil, beispielsweise ein Bolzen, eine Schraube oder ein vergleichbares Teil eingesetzt wird.

Zweckmäßigerweise ist diese Spreizdübelform reversibel ausgebildet. Der Kontakt kann dadurch unterbrochen werden, dass das aufweitende Teil entfernt wird.

Bei einer weiteren Ausführungsform ist die Kontaktfläche als eine thermisch verformbare Fläche, insbesondere als ein Lötkontakt, ausgebildet. Schließlich ist auch eine Ausführungsform möglich, bei der die Kontaktfläche als eine mit der Leiterfläche klebfähige und/oder chemisch bindungsfähige Fläche ausgeführt ist. Mit diesen Ausführungsformen wird eine vorwiegend irreversible Kontaktierung erreicht.

Weitere Ausführungsformen umfassen eine irreversibel installierte Muffe und einen entsprechenden reversibel montierbaren Kontaktstift. Dies ermöglicht eine Kombination aus den Vorteilen der irreversiblen Kontaktierung bei einer flexiblen Anbringung des Kontaktierelements.

Die jeweilige Leitfläche auf und/oder innerhalb des Wandkörpers kann in unterschiedlichen Formen ausgebildet sein. Bei einer ersten Ausführungsform ist die Leitfläche ein elektrisch leitfähiges Gewebe. Das leitfähige Gewebe kann als leitfähiges Textil oder auch als leitfähiges Drahtgewebe ausgebildet sein.

Bei einer anderen Ausführungsform ist die Leiterfläche ein Gitter, insbesondere ein Streckgitter. Diese Ausführungsform bietet den Vorteil einer zusätzlichen Armierung des Wandkörpers bzw. der Wandkörperoberfläche.

Des weiteren ist zwischen den Leiterflächen eine Abstandshalterung vorgesehen, die deren hinreichend exakte parallele Lage zueinander sichert.

Die Erfindung soll nachfolgend anhand von Ausführungsbeispielen näher erläutert werden. Zur Verdeutlichung dienen die Figuren 1 bis 11. Es werden für gleiche bzw. gleich wirkende Teile die selben Bezugszeichen verwendet.

Es zeigt:
- Fig. 1: eine einem Wandkörper aufgelagerte äußerlich isolierte Anordnung aus zwei Leiterflächen mit einem im Wandkörper befestigten Kontaktelement,
- Fig. 2: eine dem Wandkörper aufgelagerte, äußerlich nicht isolierte Anordnung,
- Fig. 2a: eine beispielhafte Ausführungsform eines Plattenelementes,
- Fig. 2b: ein Kontaktelement in Form einer Kontaktmuffe zum Einschieben in eine Wandbohrung und einen Kontaktierdübel zum Einschieben in die Kontaktmuffe,
- Fig. 3: einen Kontaktierdübel mit einem als Drehschalter ausgebildeten Schaltmittel,
- Fig. 4: einen Kontaktierdübel mit einem als Druckschalter ausgebildeten Schaltmittel,
- Fig. 5: einen Kontaktierdübel mit einem als Zugschalter ausgebildeten Schaltmittel,
- Fig. 6: einen Kontaktierdübel nach Fig. 5 mit einem Schalthebel,
- Fig. 7: einen Kontaktierdübel in einer Spreizdübelausführung,
- Fig. 7a: einige Varianten möglicher Leiterverläufe in einem Kontaktierdübel,
- Fig. 8: einen Kontaktierdübel mit Kontaktflächen in Form von Lötkontakten,
- Fig. 9: eine beispielhafte Leiterfläche in Form eines leitfähigen Gewebes,
- Fig. 10: beispielhafte Schnitte durch einen Wandkörper mit mehreren eingearbeiteten Leiterflächen für mehrphasige Spannungsabgriffe,

- Fig. 11: eine beispielhafte Realisierung einer Spannungsversorgung für eine Beleuchtungseinrichtung,

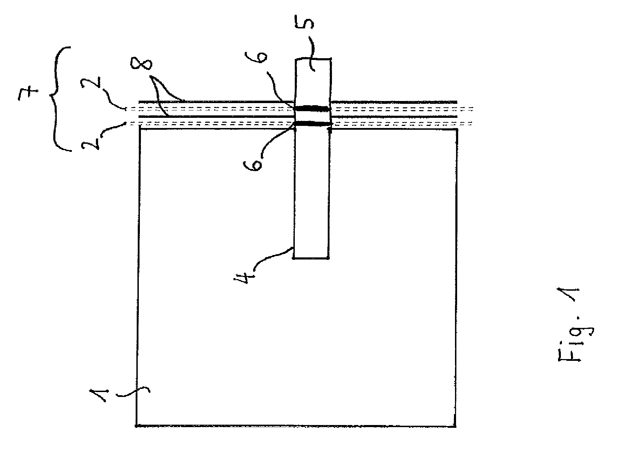

Fig. 1 zeigt eine einem Wandkörper 1 aufgelagerte Anordnung aus zwei Leiterflächen 2. Der Wandkörper kann an sich beliebig orientiert sein. Er kann insbesondere auch ein Boden bzw. eine Decke eines gegebenen Raumes bilden. Durch die Leiterflächen hindurch ist in den Wandkörper eine Bohrung 4 eingebracht. Ein Kontaktierelement 5 ist von außen durch die Leiterflächen in die Bohrung eingeführt und im Wandkörper befestigt. Das Kontaktierelement besteht aus einem elektrisch isolierenden Material oder weist eine isolierende Beschichtung auf. Über elektrisch leitende Kontaktabschnitte 6 ist das Kontaktierelement mit den Leiterflächen 2 kontaktiert und greift die zwischen beiden Leiterflächen anliegende Spannung ab. Über interne elektrische Leiter im Kontaktierelement wird ein elektrischer Stromkreis mit einem hier nicht gezeigten externen Verbraucher hergestellt. Der Verbraucher selbst kann sich insbesondere unmittelbar an der Wand befinden.

Die Leiterflächen 2 sind bei dem hier gezeigten Beispiel als Bestandteile einer schichtförmigen Leiteranordnung 7 ausgebildet, die eine beliebig große Fläche des Wandkörpers überdeckt. Elektrisch isolierende Abstandsschichten 8 verhindern einen Kurzschluss zwischen den Leiterflächen und sichern einen gleichbleibenden Abstand zwischen den Leiterflächen. Eine der beiden Abstandsschichten, vorzugsweise die oberflächlich sichtbare Abstandsschicht, kann als Wandverputz oder dergleichen weiteres verblendendes Wandgestaltungselement ausgebildet sein.

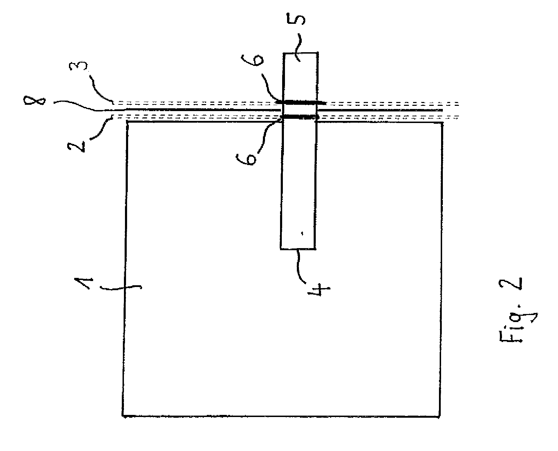

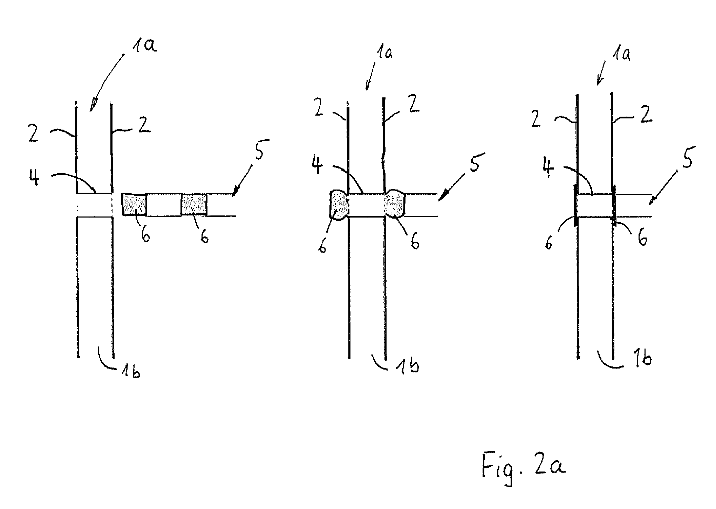

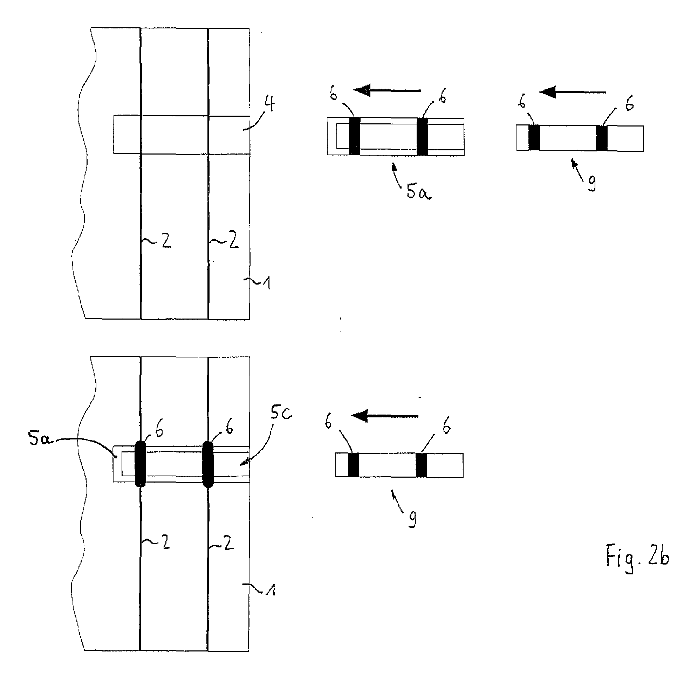

Fig. 2 zeigt eine im wesentlichen der Ausführungsform aus Fig. 1 entsprechende Gestaltung. Bei der hier gezeigten Variante wird auf eine oberflächliche isolierende Beschichtung verzichtet. Eine äußere Leiterfläche 3 liegt grundsätzlich frei, sie kann jedoch nachträglich verputzt oder in anderer Weise versiegelt werden. Hier empfiehlt sich eine Netz- oder Gitterstruktur der Leiterfläche, die eine zusätzliche stabilisierende Funktion für den Verputz oder die Versiegelung erfüllt.

Die Leiterflächen 2 und/oder 3 weisen zweckmäßigerweise eine eigene Isolierung auf, die beim Einbringen der Bohrung 4 lokal aufgebrochen wird und an dieser Stelle einen elektrischen Kontakt ermöglicht. Eine derartige Isolierung verhindert Kriechströme im Wandkörper bzw. im Verputz oder der Verkleidung.

Fig. 2a zeigt ein beispielhaftes Plattenelement 1a, das zum Verkleiden eines Wandkörpers gemäß der Ausführungsform nach Fig. 1, oder auch als ein Teil einer mobilen und demontierbaren Wand verwendbar ist. Das Plattenelement besteht aus einem Plattengrundkörper 1b, der elektrisch nicht leitfähig ist, und den bereits erwähnten Leiterflächen 2.

Der Plattengrundkörper besteht insbesondere aus einem Rigips-Verbund, der auch unter der Bezeichnung "Gipskarton" bekannt ist. Das Plattenelement kann daher im wesentlichen wie eine Rigips-Platte zur nachträglichen Sanierung und Verblendung gegebener Wände sowie Decken oder Böden verwendet werden.

Die Leiterflächen 2 sind mit dem Plattengrundkörper unlösbar verbunden, insbesondere verpresst. Dabei erweisen sich gitter- bzw. maschenartige Ausführungsformen, aber auch Ausführungsformen aus Dünnblech oder Lacke und Beschichtungen als zweckmäßig.

Wie bereits beschrieben, wird auch bei dieser Ausführungsform zunächst an beliebiger Stelle eine Bohrung 4 eingebracht und danach das Kontaktierelement 5 in den Plattenkörper eingeschoben. Dabei weist das Kontaktierelement Kontaktflächen 6 auf, die sich infolge des Einschiebens des Kontaktierelementes aufweiten und mit beidseitigem Druck gegen die Leiterflächen pressen und somit einen zuverlässigen elektrisch leitenden Kontakt mit den Leiterflächen herstellen. Derartige Ausführungsbeispiele werden im Folgenden beschrieben.

Alternativ dazu sind auch scheibenförmige Kontaktflächen möglich. Diese Ausführungsform ist in Fig. 2a rechts dargestellt. Eine solche Ausführungsform eignet sich besonders für freistehende Plattenelemente, die insbesondere bei Messeaufbauten oder vergleichbaren vorwiegend mobilen und vorübergehenden Aufbauten typisch sind.

Fig. 2b zeigt eine beispielhafte Ausführungsform eines Kontaktiermittels in Form einer Kontaktmuffe 5a in Kombination mit einem Kontaktierdübel 9. Auf Seiten des Wandkörpers 1 befinden sich auch hier die Leiterflächen 2 und eine an beliebiger Stelle eingebrachte Bohrung 4. Diese entspricht in ihrem Innendurchmesser dem Außendurchmesser der Kontaktmuffe 5a.

Die Kontaktmuffe 5a besteht aus einer elektrisch isolierenden Hülse mit darin eingelassenen Kontaktabschnitten 6. Diese ist in die Bohrung 4 einschiebbar, wobei ein elektrischer Kontakt zwischen den Kontaktabschnitten und den Leiterflächen hergestellt wird. In die so im Wandkörper erzeugte Buchse 5c ist nun der Kontaktierdübel 9 einführbar. Es ist allerdings ohne weiteres möglich, auf die Kontaktmuffe 5a zu verzichten und den Kontaktierdübel direkt in die Bohrung einzusetzen. Der Vorteil der Kontaktmuffe besteht jedoch darin, dass mit diesem Mittel ein genau definierter und genormter Anschluss in der Bohrung 4 realisierbar ist. Die Kontaktmuffe ist irreversibel in die Wandbohrung eingesetzt und auf chemische, thermische oder mechanische Weise mit den Leiterflächen elektrisch leitend verbunden. Der Kontaktstift ist reversibel, d.h. entnehmbar, in die Kontaktmuffe eingeschoben.

Eine Entnahme des Kontaktierelementes und ein Verfüllen der Bohrung 4 ist jederzeit problemlos möglich und beeinflusst den Stromfluss innerhalb der Leiterflächen nicht. Hervorgehoben werden soll an dieser Stelle, dass über die Leiterflächen auch eine auf einem Stromfluss beruhende Signal- und Datenübertragung erfolgen kann.

Bei den folgenden Ausführungsbeispielen soll der Kontaktierdübel 9 näher erläutert werden. Der Kontaktierdübel weist dabei ein Schaltelement zum Schließen bzw. Öffnen des Kontaktes mit den Leiterflächen auf. Der Kontaktierdübel kann somit als Schalter verwendet werden.

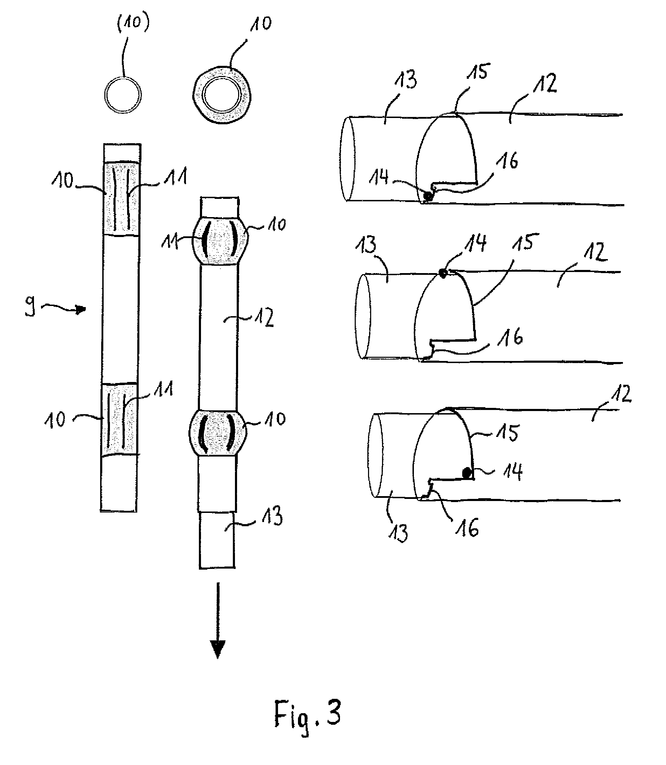

Fig. 3 zeigt ein erstes diesbezügliches Beispiel. Der Kontaktierdübel 9 weist eine im wesentlichen zylindrische Form auf. Er enthält zwei Kontaktflächen 10, die Teilbereiche der Mantelfläche des Dübels bilden. Der Körper des Kontaktierdübels ist bis auf die Kontaktflächen elektrisch isolierend, er besteht aus einem Isolatormaterial oder einem elektrisch leitenden Material mit einer isolierenden Beschichtung.

Die Kontaktflächen 10 bestehen aus einem elektrisch leitenden, verformbaren Material, beispielsweise aus einem leitenden Kunststoff oder einem biegsamen Metallstreifen oder Gewebe. Sie sind so ausgebildet, dass sich der Durchmesser des Kontaktierdübels im Bereich der Kontaktflächen reversibel verändern lässt. Wie in der linken Darstellung in Fig. 3 gezeigt, lässt sich der Bereich der Kontaktflächen verkürzen, dadurch werden die Kontaktflächen gestaucht und nach außen gedrückt. Bei dieser Bewegung wird der Kontakt mit den umgebenden Leiterflächen geschlossen. Eine Verlängerung des Bereichs der Kontaktflächen führt zu deren Streckung und Straffung. Dabei werden die Kontaktflächen zurückgezogen und der Kontakt mit den Leiterflächen unterbrochen. Für diese Verformungen sind die Kontaktflächen bei diesem Ausführungsbeispiel mit Schlitzen 11 versehen, die sich bei der erwähnten Verformung aufspreizen und schließen.

Bei dem in Fig. 3 gezeigten Beispiel wird die Verkürzung des Kontaktierdübels durch eine schraubenartige Bewegung erzeugt. Der Kontaktierdübel besteht hierzu aus einer elektrisch isolierenden Außenhülle 12 und einem relativ zur Außenhülle dreh- und verschiebbaren Innenkörper 13. Der Innenkörper weist eine Nase 14 auf, die sich entlang einer Schraubenlinie 15 bewegt. Eine in der Nähe einer Endstellung der Schraubenkante eingearbeitete Ausnehmung 16 dient zu einer verrastenden Aufnahme und Arretierung der Nase 14 in einer Endstellung. Bei der so stattfindenden Relativbewegung zwischen der Außenhülle und dem Innenkörper wird der Innenkörper verschoben und zieht dabei die Kontaktflächen mit sich, wobei deren Stauchung und Streckung ausgeführt werden.

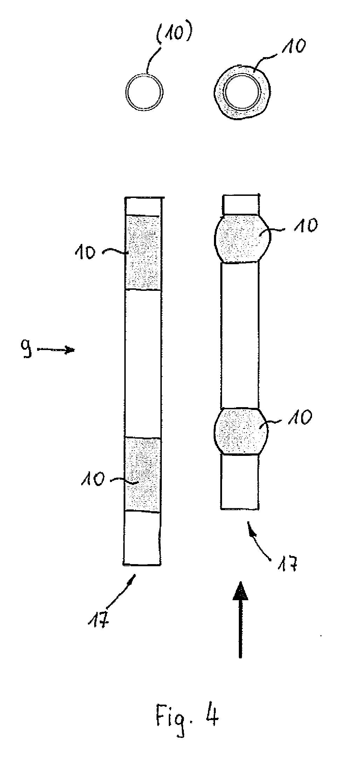

Fig. 4 zeigt eine Ausführungsform des Schaltmittels in Form eines Druckschalters 17. Die Kontaktflächen 10 bestehen wie beschrieben aus einem verformbaren leitenden Material. Der Druckschalter besteht aus einem in seiner Länge verstellbaren Grundkörper des Kontaktierdübels. Bei einem Druck auf den in der Bohrung steckenden Kontaktierdübel werden die Kontaktflächen gestaucht und treten hervor. Dabei werden diese gegen die Leiterflächen in der Bohrung gepresst und stellen den elektrischen Kontakt her. Ein Zug an dem Kontaktierdübel führt zu einer Streckung der Kontaktflächen und dadurch zu einer Verringerung des Durchmessers. Der elektrische Kontakt mit den Leiterflächen wird dadurch unterbrochen.

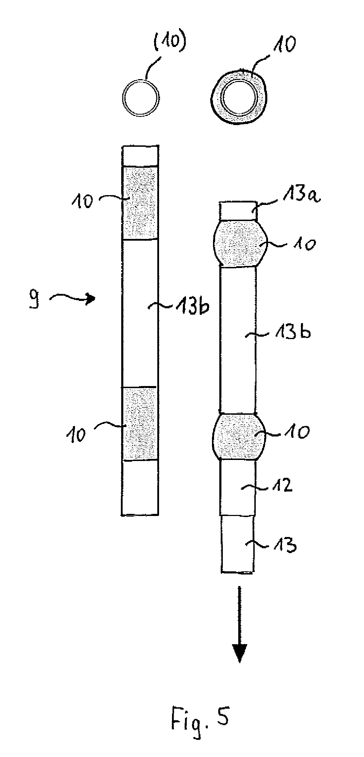

Fig. 5 zeigt eine Ausführungsform des Schaltmittels in Form eines Zugschalters. Der Kontaktierdübel 9 besteht hierzu aus der Außenhülle 12 und dem Innenkörper 13, die bei dieser Ausführungsform zueinander lediglich verschiebbar, aber nicht zwangsläufig drehbar gelagert sind. Die Verkürzung und Stauchung der Kontaktflächen 10 mit dem Schließen des elektrischen Kontaktes wird hier durch einen Zug an dem Innenkörper 13 bewirkt. Dieser schiebt an einem Endstück 13a und einem Mittelstück 13b die mindestens eine Kontaktfläche zusammen und staucht sie.

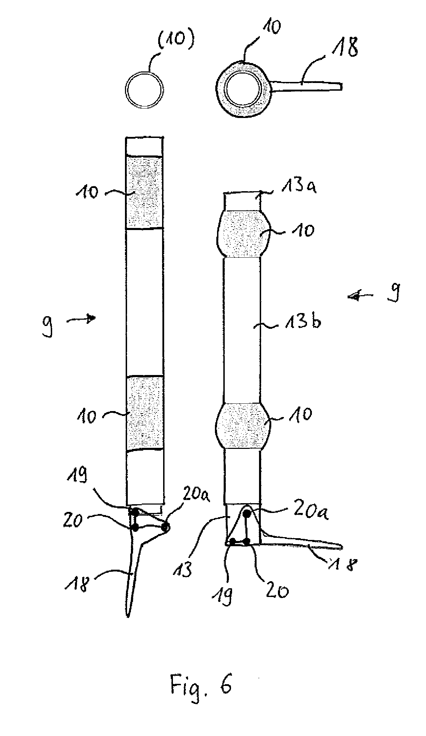

Wie in Fig. 6 gezeigt, kann der beschriebene Zugschalter mit einem nach dem Zugankerprinzip wirkenden Schalthebel 18 kombiniert werden. Der Schalthebel ist an einem Drehpunkt 19 am Innenkörper befestigt. In der Umgebung des Drehpunktes befinden sich ein Anschlagspunkt 20 und ein Schenkel 20a. Der Anschlagspunkt verhindert ein Überstrecken des Schalthebels 18 beim Herausziehen des Innenkörpers, der Schenkel 20a arretiert den Innenkörper in der herausgezogenen Stellung. Die Bewegung des Schalthebels bewirkt dabei sowohl ein Ein- oder Ausschalten des elektrischen Kontaktes, als auch eine gewisse Verankerung des Kontaktierdübels im Bereich der Leiterflächen, die durch die Verformung der Kontaktflächen bewirkt wird.

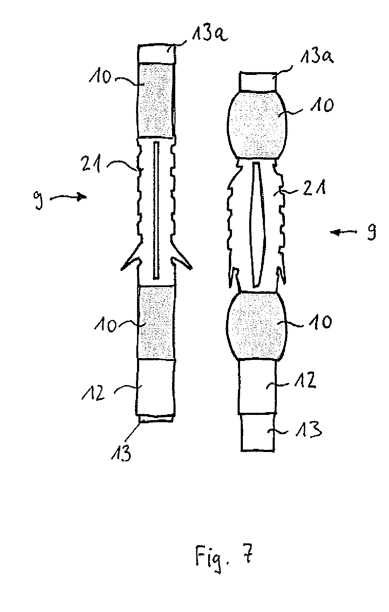

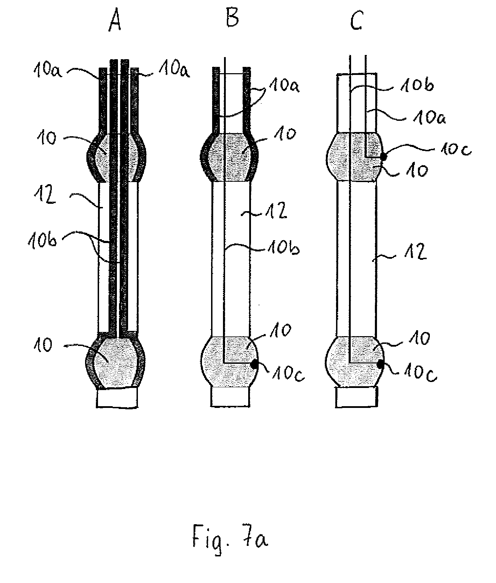

Wie in Fig. 7 beispielhaft gezeigt, kann das Prinzip des Zugschalters bzw. des Zugankers mit einer Gestaltung des Kontaktierdübels in Form eines Spreizdübels kombiniert sein. Die hier gezeigte Ausführungsform des Kontaktierdübels besteht neben den Kontaktflächen 10, der Außenhülle 12 und dem Innenkörper 13 aus einem Spreizdübelabschnitt 21. Wie aus der Figur zu entnehmen ist, wird der Spreizdübelabschnitt beim Herausziehen des Innenkörpers 13 aufgeweitet und presst sich gegen die Innenwand des Bohrloches. Ein Hineindrücken des Innenkörpers 13 in den Kontaktierdübel führt zu einer Rückbildung der Spreizung und einer Streckung der Kontaktflächen. Der Kontaktierdübel ist dann von den Leiterflächen getrennt und kann darüber hinaus auch aus der Bohrung entfernt werden, sofern dies erforderlich ist.

Fig. 7a zeigt beispielhafte Leiterführungen an einem Kontaktierdübel in drei verschiedenen Ausführungsformen. Bei der Ausführungsform A, die links in Fig. 7a gezeigt ist, ist ein äußerer Leiter 10a und ein innerer Leiter 10b vorgesehen. Der äußere Leiter 10a bildet dabei ein erstes Teilstück eines Außenmantels des Kontaktierdübels und schließt mit einer Kontaktfläche 10 ab. Der innere Leiter 10b verläuft isoliert vom äußeren Leiter 10a im Inneren des Kontaktierdübels und tritt, beabstandet durch einen isolierenden Abschnitt der Außenhülle 12 an einer weiteren Kontaktfläche 10 nach außen. Die Kontaktflächen 10 sind dabei mit dem äußeren Leiter 10a bzw. dem inneren Leiter 10b identisch.

Bei der Ausführungsform B im mittleren Teil von Fig. 7a bildet der äußere Leiter 10a einen Teil der Oberfläche des Kontaktierdübels, während der innere Leiter 10b vollständig innerhalb des Kontaktierdübels verläuft und von innen an eine Kontaktfläche 10 herangeführt und mit dieser an einem Kontaktpunkt 10c verbunden ist.

Bei der Ausführungsform C in Fig. 7a verlaufen sowohl der erste als auch der zweite Leiter im Inneren des äußerlich nicht leitfähigen Kontaktierdübels und sind nur an den Kontaktflächen nach außen geführt.

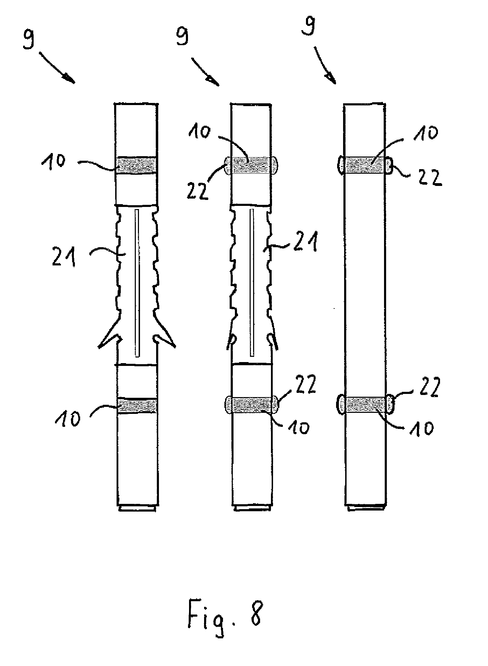

Fig. 8 zeigt beispielhafte Kontaktierdübel, die für eine permanente Installation im Wandbereich vorgesehen sind. Die links und in der Mitte gezeigte Ausführungsform entspricht hinsichtlich des Spreizdübelabschnitts 21 der Ausführungsform in Fig. 7. Zusätzlich sind die Kontaktflächen als thermisch permanent verformbare Bereiche 22 ausgebildet, die unter Wärmeeinwirkung eine fließfähige oder plastische Beschaffenheit annehmen. Dies kann je nach Ausführungsform beispielsweise ein Lot oder ein leitfähiges Kunststoffmaterial bzw. ein leitfähiger Klebstoff sein. Chemisch reaktive Materialien, die mit der Leiterfläche eine chemische Reaktion eingehen, wobei sich ein elektrisch leitfähiger Kontakt ergibt, können ebenfalls verwendet werden.

Der Grundkörper des Kontaktierdübels in der rechts in Fig. 8 gezeigten Ausführungsform ist einteilig gestaltet, er weist keine Außenhülle und keinen Innenkörper auf. Auch bei dieser Ausführungsform sind die thermisch verformbaren Bereiche 22 vorhanden. Der Kontaktierdübel ist bei dieser Ausführungsform ausschließlich über die thermisch verformbaren Bereiche 22 im umgebenden Wandbereich verankert.

Zur Installation wird der Kontaktierdübel in das bereits eingebrachte Bohrloch eingeschoben. Anschließend wird der Kontaktierdübel von außen aufgeheizt. Hierzu kann auf einen Heizstab zurückgegriffen werden, der in den Kontaktierdübel eingeschoben wird und somit Wärme direkt vom Innenbereich des Dübels an die Kontaktflächen führt. Das dort vorhandene Material schmilzt dabei auf und verläuft in der Umgebung des Bohrloches, d.h. an der entsprechenden Leiterfläche. Dabei wird ein elektrisch leitender Kontakt mit der Leiterfläche erzeugt. Anschließend kann ein Befestigungsmittel, insbesondere ein Gewindebolzen oder eine Schraube, in den nun festsitzenden Kontaktierdübel eingedreht werden, der den Spreizdübelabschnitt 21 aufweitet und den Dübel zusätzlich in der Bohrung verankert.

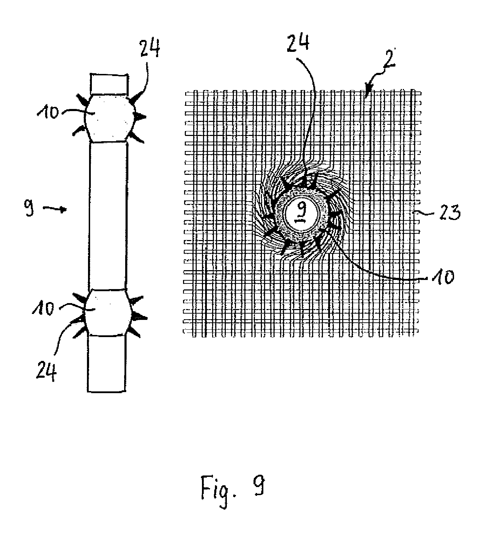

Fig. 9 zeigt eine beispielhafte Ausführungsform einer Leiterfläche. Bei diesem Beispiel besteht die Leiterfläche aus einem elektrisch leitfähigen Gewebe 23. Das Gewebe besteht mindestens teilweise aus leitenden Fasern, beispielsweise Metallfäden, einem engmaschigen Drahtnetz oder elektrisch leitfähigen Textilfasern. Für eine bessere Kontaktierung zwischen den Kontaktflächen 10 und dem Gewebe können die Kontaktflächen eine aufgeraute oder gezackte Oberflächenstruktur 24 aufweisen. Diese greift in die Gewebefasern ein und zieht diese teilweise beim Einschieben des Kontaktierdübels mit sich. Eine derartige Oberflächengestaltung empfiehlt sich vorwiegend für eine permanente Kontaktierung des Kontaktierdübels mit dem leitfähigen Gewebe.

Alternativ dazu ist auch eine hier nicht gezeigte Ausführungsform der Leiterfläche in Form eines Streckgitters möglich. Eine derartige Ausführungsform eignet sich besonders gut für eine zusätzliche Armierung des Wandkörpers oder Putzes. Streckgitter weisen darüber hinaus auch größere Leitungsquerschnitte als Gewebe auf. Dies bedingt einen tendenziell niedrigeren Leitungswiderstand mit größeren Stromstärken.

Natürlich lässt sich die Leiterfläche auch in Form einer durchgehenden Metallplatte realisieren, die durchbohrt wird.

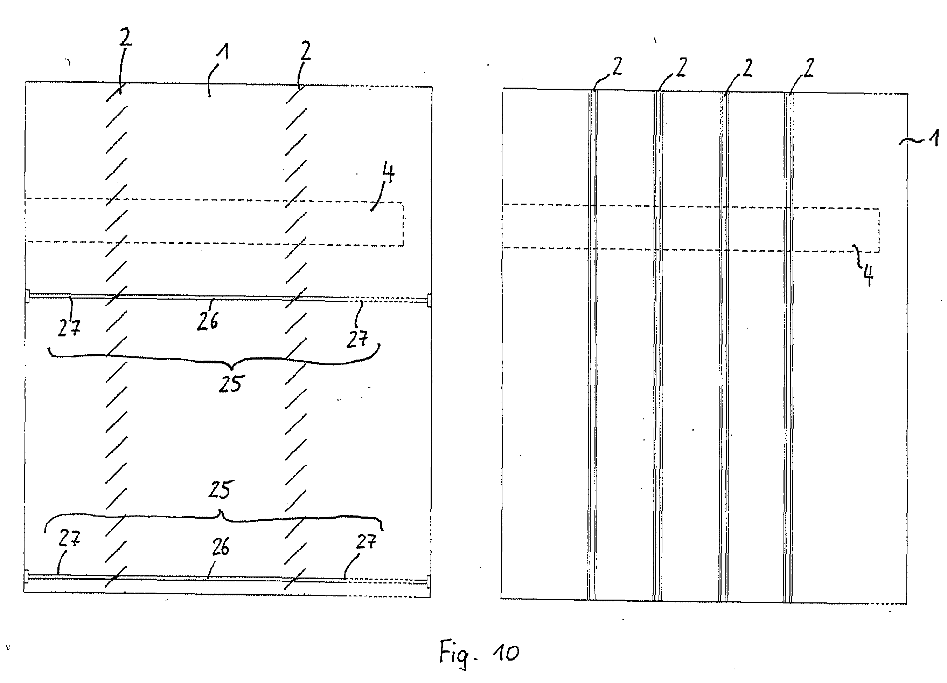

Fig. 10 zeigt zwei beispielhafte Schnitte durch einen Wandkörper mit in den Wandkörper selbst eingefügten Leiterflächen. Bei der linken Darstellung sind in den Wandkörper 1 zwei Leiterflächen 2 eingefügt. Der Wandkörper enthält weiterhin in regelmäßigen Abständen angeordnete Abstandshalter 25, die einen gleich bleibenden parallelen Abstand zwischen den Leiterflächen sichern. Sie werden zusammen mit den Leiterflächen in den Wandkörper bei dessen Aufbau eingefügt.

Bei dem hier vorliegenden Beispiel bestehen die Abstandshalter aus jeweils zwei Wandabstandshaltern 27, die einen gleich bleibenden Abstand der Leiterflächen in Bezug auf die Oberflächen des Wandkörpers sicherstellen, und einem Leiterflächenabstandshalter 26, der einen gleichbleibenden Abstand zwischen den Leiterflächen im Wandkörper sichert. Beim Herstellungsprozess des Wandkörpers in Form einer Sichtbetonwand gewährleisten die Wandabstandshalter 27 einen gleichbleibenden Abstand der Leiterflächen gegenüber einer äußeren Verschalung.

Die rechte Abbildung in Fig. 10 zeigt einen Wandkörper 1 mit mehreren parallel zueinander angeordneten Leiterflächen 2. Grundsätzlich können in einen Wandkörper, sofern der dafür benötigte Platz vorhanden ist, beliebig viele Leiterflächen integriert sein. Dies ermöglicht eine mehrphasige Spannungsversorgung. Es ist aber auch eine Signalübertragung mit mehreren Übertragungskanälen möglich. Diese kann sowohl unabhängig als auch in Kombination mit einer Stromversorgung ausgeführt sein. Die vorhergehend erläuterten Kontaktierdübel müssen einer solchen Anordnung angepasst sein. Sie enthalten in diesem Fall mehr als zwei Kontaktflächen oder Kontaktflächen, die in einer entsprechenden Weise auf dem Kontaktierdübel angeordnet sind.

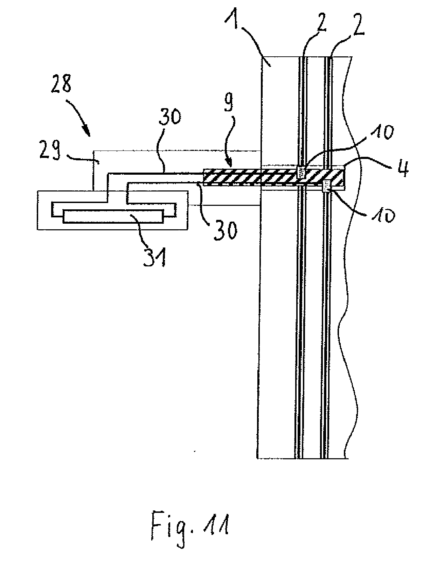

Fig. 11 zeigt eine beispielhafte Anwendung der erfindungsgemäßen Vorrichtung in Verbindung mit einer an der Wand befestigten Beleuchtungseinrichtung. Wie beschrieben enthält der Wandkörper zwei Leiterflächen 2 mit der nachträglich eingebrachten Bohrung 4, in die der Kontaktierdübel 9 mit den Kontaktflächen 10 eingeschoben ist. Der Kontaktierdübel steht aus dem Wandkörper mit einer gewissen Länge heraus. An diesem herausragenden Teilstück ist eine Leuchte 28 befestigt. Bei dem hier dargestellten Beispiel ist ein Gehäuse 29 auf den Dübel aufgesteckt. Eine Anordnung von elektrischen Leitern 30 führt von dem Kontaktierdübel innerhalb des Gehäuses 29 zu einer Leuchteneinrichtung 31, die beispielsweise als eine Leuchtstoffröhre ausgeführt ist. Der Übergang zwischen den elektrischen Leitern innerhalb des Kontaktierdübels und den elektrischen Leitern innerhalb der Beleuchtungseinrichtung ist zweckmäßigerweise durch einen hier nicht gezeigten Steckkontakt realisiert.

Die Erfindung wurde anhand von Ausführungsbeispielen erläutert. Im Rahmen fachmännischen Handelns sind Abänderungen an den gezeigten Beispielen möglich, die den Bereich des erfindungsgemäßen Grundgedankens nicht verlassen. Weitere Ausführungsformen ergeben sich aus den Unteransprüchen.

### Bezugszeichenliste

- 1: Wandkörper
- 1a: Plattenelement
- 1b: Plattengrundkörper
- 2: Leiterfläche
- 3: Äußere Leiterfläche
- 4: Bohrung
- 5: Kontaktierelement
- 5a: Kontaktmuffe
- 6: Kontaktabschnitt
- 7: schichtförmige Leiteranordnung
- 8: isolierende Abstandsschicht
- 9: Kontaktierdübel
- 10: Kontaktfläche
- 10a: äußerer Leiter
- 10b: innerer Leiter
- 10c: Kontaktpunkt
- 11: Schlitz
- 12: Außenhülle
- 13: Innenkörper
- 13a: Endstück
- 13b: Mittelstück
- 14: Nase
- 15: Schraubenlinie
- 16: Ausnehmung
- 17: Druckschalter
- 18: Schalthebel
- 19: Drehpunkt
- 20: Anschlagspunkt
- 20a: Schenkel
- 21: Spreizdübelabschnitt
- 22: Kontaktfläche, thermisch verformbar
- 23: Gewebe, elektrisch leitfähig
- 24: Aufrauung
- 25: Abstandshalter
- 26: Leiterflächenabstandshalter
- 27: Wandabstandshalter
- 28: Leuchte
- 29: Gehäuse
- 30: elektrische Leiter
- 31: Leuchte

## Patentansprüche

1. Vorrichtung zur Versorgung mit elektrischer Spannung und/oder Signal- und Datenübertragung,
umfassend
eine in und/oder auf einem elektrisch isolierenden Wandkörper (1) verlegte, parallel zu einer Wandoberfläche orientierte Anordnung aus einer ersten elektrischen Leiterfläche (2) und mindestens einer weiteren, bezüglich der ersten elektrischen Leiterfläche elektrisch isolierten, parallel orientierten elektrischen Leiterfläche mit einem in den Wandkörper einsetzbaren Kontaktierelement (5) mit Kontaktabschnitten (6) zum Abgreifen einer zwischen den Leiterflächen anliegenden elektrischen Spannung.

2. Vorrichtung nach Anspruch 1,
**gekennzeichnet durch**
eine auf dem Wandkörper (1) aufgelagerte schichtförmige Anordnung (7) aus mehreren elektrischen Leiterflächen (2) und jeweils dazwischen angeordneten elektrisch isolierenden Abstandsschichten (8).

3. Vorrichtung nach Anspruch 2,
**dadurch gekennzeichnet, dass**
die schichtförmige Anordnung mit einer isolierenden Deckschicht, insbesondere einer Putzschicht, überdeckt ist.

4. Vorrichtung nach Anspruch 1,
**gekennzeichnet durch**
eine in den Wandkörper eingeschlossene Anordnung aus mindestens einer ersten und zweiten Leiterfläche.

5. Vorrichtung nach einem der vorhergehenden Ansprüche,
**dadurch gekennzeichnet, dass**
das Kontaktierelement mit den Kontaktabschnitten als ein stabförmiger Kontaktierdübel (9) mit zueinander beabstandeten, auf einer Mantelfläche des Kontaktierdübels angeordneten und mit jeweils einer Leiterfläche elektrisch kontaktierbaren Kontaktflächen (10) mit einem im Körper des Kontaktierdübels vorgesehenen elektrischen Leiter und/oder einem elektrischen Bauelement ausgebildet ist.

6. Vorrichtung nach einem der vorhergehenden Ansprüche,
**dadurch gekennzeichnet, dass**
der Kontaktierdübel (9) ein Schaltmittel zum beliebigen Schließen und Unterbrechen des elektrischen Kontaktes zwischen mindestens einer Kontaktfläche (10) und mindestens einer Leiterfläche aufweist.

7. Vorrichtung nach Anspruch 6,
**dadurch gekennzeichnet, dass**
das Schaltmittel als ein Mittel zur Formänderung der Kontaktfläche (10), insbesondere zu deren reversiblen Verdickung, ausgebildet ist.

8. Vorrichtung nach einem der Ansprüche 5 bis 7,
**dadurch gekennzeichnet, dass**
das Schaltmittel als ein schraubenartiger Aufbau aus einer Außenhülse (12) und einem relativ dazu dreh- und verschiebbaren Innenkörper (13) und der durch die Schraubbewegung formveränderbaren Kontaktfläche ausgebildet ist.

9. Vorrichtung nach einem der Ansprüche 5 bis 7,
**dadurch gekennzeichnet, dass**
das Schaltmittel als ein Druckschalter (17) aus der Außenhülse (12) und dem innerhalb der Außenhülse verschiebbaren Innenkörper (13) und der durch die Verschiebung formveränderbaren Kontaktfläche ausgebildet ist.

10. Vorrichtung nach Anspruch 9,
**dadurch gekennzeichnet, dass**
der Druckschalter (17) einen verriegelbaren Schalthebel (18) aufweist.

11. Vorrichtung nach einem der Ansprüche 5 bis 7,
**dadurch gekennzeichnet, dass**
das Schaltmittel als ein aufweitbarer Spreizdübel (21) ausgebildet ist.

12. Vorrichtung nach Anspruch 11,
**dadurch gekennzeichnet, dass**
der Spreizdübel reversibel aufweitbar ist.

13. Vorrichtung nach einem der vorhergehenden Ansprüche,
**dadurch gekennzeichnet, dass**
die Kontaktfläche (10) thermisch verformbar, insbesondere als ein Lötkontakt (22), ausgebildet ist.

14. Vorrichtung nach einem der vorhergehenden Ansprüche, **dadurch gekennzeichnet, dass**
die Kontaktfläche (10) als eine mit der Leiterfläche klebfähige und/oder chemisch bindungsfähige Fläche ausgebildet ist.

15. Vorrichtung nach einem der vorhergehenden Ansprüche,
**dadurch gekennzeichnet, dass**
die Leiterfläche (2) als ein elektrisch leitfähiges Gewebe (23) ausgebildet ist.

16. Vorrichtung nach Anspruch 15,
**dadurch gekennzeichnet, dass**
das leitfähige Gewebe (23) ein leitfähiges Textil ist.

17. Vorrichtung nach Anspruch 15,
**dadurch gekennzeichnet, dass**
das leitfähige Gewebe (23) ein leitfähiges Drahtgewebe ist.

18. Vorrichtung nach einem der vorhergehenden Ansprüche,
**dadurch gekennzeichnet, dass**
die Leiterfläche (2) ein Gitter, insbesondere ein Streckgitter, ist.

19. Vorrichtung nach einem der vorhergehenden Ansprüche,
**gekennzeichnet durch**
eine zwischen den Leiterflächen (2) angeordnete Abstandshalteranordnung.

20. Vorrichtung nach einem der vorhergehenden Ansprüche,
**gekennzeichnet durch**
eine in eine Bohrung des Wandkörpers einschiebbare Kontaktmuffe (5a).
